# EUROPÄISCHE PATENTSCHRIFT

(11) **EP 3 082 639 B1**
(45) Veröffentlichungstag und Bekanntmachung des Hinweises auf die Patenterteilung: **01.01.2020**
(21) Anmeldenummer: 14793865.8
(22) Anmeldetag: 07.11.2014
(51) Int. Cl.: A61C 8/00

(54) **DENTALES IMPLANTAT**
DENTAL IMPLANT
IMPLANT DENTAIRE

(30) Priorität: 20.12.2013 DE 102013021934
(43) Veröffentlichungstag der Anmeldung: 26.10.2016
(73) Patentinhaber: Hürzeler/Zuhr Academy GmbH, 81925 München (DE)
(72) Erfinder: HÜRZELER, Markus, 81925 München (DE)
(74) Vertreter: Grünecker Patent- und Rechtsanwälte PartG mbB
(86) Internationale Anmeldenummer: PCT/EP2014/074014
(87) Internationale Veröffentlichungsnummer: WO 2015/090722

(56) Entgegenhaltungen:
- EP-A1- 2 444 025
- WO-A1-2013/117594
- DE-A1- 4 041 378
- JP-U- H0 279 916
- US-A1- 2006 078 847
- US-A1- 2011 250 564
- US-A1- 2011 306 015
- US-B1- 7 293 991
- US-B1- 7 377 781

## Beschreibung

Die Erfindung betrifft ein einteiliges enossales Dentalimplantat mit einem verbesserten Übergangsbereich zwischen Implantat und Zwischenstück (*Abutment*)*.*

Dentale Implantate können so in den Kieferknochen eingebracht werden, dass ihre Oberkante bündig mit dem Knochen abschließt oder oberhalb davon im Bereich des bedeckenden Zahnfleischs endet.

Die auf dem Implantat verankerte Zahnkrone wird üblicherweise durch ein Zwischenstück oder Aufbauelement, das sogenannte Abutment, im Sinne einer Dübel-Schraube-Verbindung (Dübel = Implantat, Schraube = Abutment) mit dem Implantat verschraubt. Dieses Abutment hat den gleichen Durchmesser wie das Implantat, so dass sich ein bündiger Übergang ergibt.

Im Bereich dieses Übergangs kommt es in den ersten Monaten nach Einbringen des Implantats zu einem Abbau des Kieferknochens von etwa 1 mm. Das wird unter anderem darauf zurückgeführt, dass im Übergangsbereich zwischen Implantat und Abutment ein Spalt besteht, in dem sich Bakterien vermehren können (Zipprich et al., 2007). Ebenso wurde in zahlreichen Studien (Atieh et al., 2010) gezeigt, dass es einen positiven Effekt auf den Erhalt des Knochens hat, wenn das Abutment einen geringeren Durchmesser als das Implantat hat, das Abutment also nicht auf der Außenkante des Implantats aufsetzt (Prinzip des "*platform-matchings*"), sondern nach zentral versetzt ist und somit weiter innen liegt (Prinzip des "platform-switchings" - Canullo et al., 2011; Khurana et al., 2011). Hierdurch rückt das Implantat-Abutment-Interface weiter von der Knochengrenze weg, was eine bessere Entfaltung des Knochens sowie eine bessere Zahnfleischanlagerung ermöglicht.

WO 2013/117594 A1 offenbart ein Dentalimplantat, wobei der Kopfteil in dem Bereich, in dem er aus dem Knochen austritt, eine kreisrunde Form hat, und weiter die Form eines Sechskants annimmt.

Der Erfindung liegt das Problem zugrunde, dass im Bereich des Übergangs von Implantat zu Abutment ein nicht zu vermeidender Mikrospalt vorliegt, der eine Retentionsnische für Bakterien darstellt. Durch die Platzierung dieses Mikrospalts unmittelbar oberhalb des Knochens kommt es zu dessen ständiger Kontamination und bakteriellen Belastung. Infolgedessen lässt sich im Zuge der natürlichen Umbauprozesse nach dem Einbringen eines Implantats im Bereich der Implantatschulter (= Oberkante) röntgenologisch ein Resorptionsvorgang beobachten, der unter anderem auf die von dem Spalt ausgehende bakterielle Belastung zurückzuführen ist.

Dieses Problem wird erfindungsgemäß durch das in Patentanspruch 1 definierte einteilige enossale Dentalimplantat gelöst,

Vorteilhafte und/oder bevorzugte Ausführungsformen der Erfindung sind Gegenstand der Unteransprüche.

Die erfindungsgemäße Lösung besteht in der Verlagerung des Übergangs von Implantat zu Abutment um beispielsweise 1,25 mm nach koronal, was durch zwei Veränderungen der Implantatform an dessen Schulter bewirkt wird. Zum einen endet das erfindungsgemäße Implantat nicht auf der Höhe des Knochens, sondern ragt beispielsweise 3,25 mm darüber hinaus, weist also einen "Kopfteil" auf. Dadurch wird der mit Bakterien besiedelte Spalt vom Knochen weg nach oben verlegt. Zum anderen ist der Durchmesser des Implantats auf Höhe des Knochens beispielsweise um 1 mm (bzw. der Radius um 0,5 mm) reduziert, d.h. zentral (nach innen) versetzt, um den Druck auf den Knochen in diesem Bereich zu reduzieren.

Der mit der Erfindung erzielte Vorteil besteht insbesondere darin, dass der Effekt des Durchmesser-reduzierten Abutments auch noch bei dichter Verbindung auf Knochenniveau im Implantatschulterbereich genutzt werden kann und gleichzeitig kein Spalt im Bereich des Austritts aus dem Knochen vorliegt.

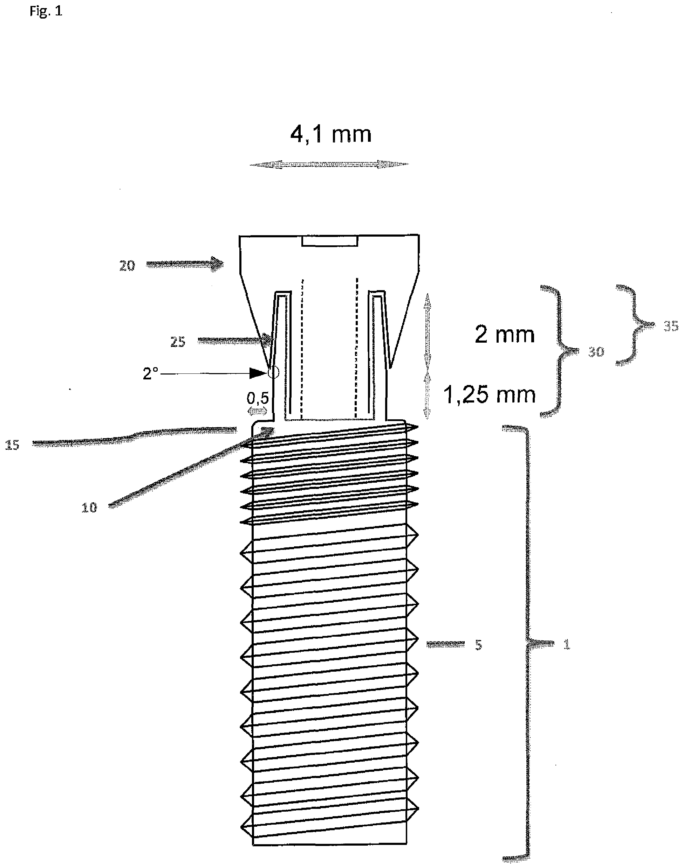

Figur 1 ist eine Seitenansicht einer Ausführungsform des erfindungsgemäßen Dentalimplantats.

Eine Bezugszeichenliste befindet sich am Ende der Beschreibung.

Im Folgenden wird die Erfindung ohne Beschränkung und lediglich zur Veranschaulichung detaillierter beschrieben.

Das Implantat kann beispielsweise in den Durchmessern 4,1 und 5,1 mm und in den Längen 6,5, 8,0, 9,5, 11,0, 12,5 und 14,0 mm angefertigt werden. Dies sind übliche Abmessungen und finden sich in jedem Sortiment. Grundsätzlich bestehen hinsichtlich der Implantatabmessungen und -proportionen natürlich keine besonderen Beschränkungen und der Fachmann passt diese nach Maßgabe der praktischen Gegebenheiten an.

Das erfindungsgemäße Implantat kann aus jedem üblicherweise zur Herstellung von Implantaten verwendeten Material bestehen, beispielsweise aus Titan oder keramischen Materialien. Titan hat den Vorteil, dass sein Elastizitätsmodul dem von Knochen ähnelt.

Außerdem ist es biologisch neutral (biokompatibel) und löst keine allergischen oder Fremdkörperreaktionen aus. Dies liegt daran, dass Titan eine direkte molekulare Verbindung mit dem Knochen eingehen kann. Der im Knochen liegende Teil des Implantats kann vorteilhafterweise eine sandgestrahlte und geätzte, sogenannte "SLA"-Oberfläche (SLA = "*Sandblasting with Large grit followed by Acid etching*") aufweisen. Das Ergebnis der SLA-Behandlung ist eine Makrorauhigkeit der (Titan)Oberfläche, durch welche sich die Knochenzellen besser mit dieser verbinden können.

Die Anzahl der Außenwindungen des Implantats kann vorteilhafterweise im oberen Bereich ansteigen (sog. progressives Windungsdesign). In dem Bereich, in dem es aus dem Knochen austritt, reduziert sich der Durchmesser erfindungsgemäß um beispielsweise 1 mm (= "*platform-switch*"). Im Bereich der folgenden beispielsweise 1,25 mm bleibt der Durchmesser gleich mit einer kreisrunden Form und reduziert sich in den folgenden beispielsweise 2 mm leicht mit einer Abwinkelung von beispielsweise 1-2°, wobei die Form eines Sechskants angenommen wird. Durch den Wechsel von der kreisrunden Form zum Sechskant entsteht ein Platz bzw. Rand von beispielsweise bis zu 2 mm für das Abutment.

Während der Heilungsphase kann eine Abdeckschraube ("*healing abutment*") aufgeschraubt werden. Diese ist beispielsweise insgesamt 3,5 mm hoch und etwa 4,0, 5,0 oder 6,0 mm breit und ihre Außenwände können beispielsweise einen Winkel von 15° oder 30° zur Implantatachse bilden. Die Abdeckschraube wird durch das Innengewinde im Implantatinneren mit einer Schraube von beispielsweise 1,2 oder 1,8 mm Durchmesser verschraubt, ebenso wie die spätere definitive Restauration. Die Geometrie der Implantat-Abutment-Verbindung ermöglicht eine große Variabilität im Austrittsprofil der definitiven Versorgung. Dadurch entsteht der Vorteil, dass für alle Regionen das gleiche Implantatdesign verwendet werden kann, was zu einer Vereinfachung im klinischen Ablauf führt.

Figur 1 zeigt ein Beispiel für ein erfindungsgemäßes Implantat. Der in den Kiefernknochen einschraubbare stiftförmige Außengewindekörper 1 ist beispielsweise 11 mm lang und hat einen Durchmesser von beispielsweise 4,1 mm. Das Außengewinde ist mit dem Bezugszeichen 5 gekennzeichnet. Im oberen Teil ist das progressive Windungsdesign mit sich erhöhender Windungsanzahl erkennbar. Auf der Höhe des Kiefernknochens (das Knochenniveau ist mit dem Bezugszeichen 15 bezeichnet) ist der Durchmesser des Implantats um 1 mm reduziert (bzw. der Radius beidseitig um 0,5 mm), d.h. zentral nach innen versetzt (= "*platform-switch*"), was mit dem Bezugszeichen 10 gekennzeichnet ist. Der Kopfteil 30 ist integraler Bestandteil des einteiligen Implantats und ragt nach dem Einschrauben aus dem Kiefernknochen heraus. Auf Knochenniveau 15 ist der Durchmesser des Kopfteils 30 koronal im Bereich der folgenden beispielsweise 1,25 mm konstant mit kreisrunder Form und in den darauffolgenden beispielsweise 2 mm reduziert sich der Durchmesser mit einem Winkel von beispielsweise 1-2° zur Implantatachse und hat die Form eines Sechskants. Durch die Reduktion des Durchmessers und die Änderung von der kreisrunden Form zum Sechskant entsteht ein Platz bzw. Rand (mit dem Bezugszeichen 25 gekennzeichnet) von je beispielsweise 2 mm für das Abutment. Hier entsteht beim Anbringen des Abutments unvermeidlich der problematische Mikrospalt.

In diesem Beispiel ist das Implantat mit einer beispielsweise 4,5 mm durchmessenden Abdeckschraube (20) ("*healing abutment*") *v*ersehen, d.h. die Außenkanten des Implantats und der Abdeckschraube bzw. des Abutments sind bündig und weisen keinen "*platform-switch*" auf. Die Abdeckschraube ist beispielsweise 3,5 mm hoch und 4,5 mm breit und ihre Außenwände können beispielsweise einen Winkel von 15° oder 30° zur Implantatachse bilden.

Bei diesem Beispiel wird der bakteriell besiedelte Mikrospalt zwischen Implantat und Abutment durch die erfindungsgemäße Konstruktion nach koronal verlagert und befindet sich nun beispielsweise 1,25 mm oberhalb des Kiefernknochenniveaus 15.

Dem Fachmann ist natürlich klar, dass zahlreiche funktionell gleichwirkende und gleichwertige Abwandlungen und Modifikationen des oben beispielhaft beschriebenen Implantats möglich sind, ohne den Schutzbereich der Patentansprüche zu verlassen.

### Bezugszeichenliste

- 1: stiftförmiger Außengewindekörper
- 5: Außengewinde
- 10: "platform-switching" des Kopfteils
- 15: Knochenniveau
- 20: Abdeckschraube ("healing abutment")
- 25: Platz für das Abutment
- 30: Kopfteil
- 35: Kopfteilbereich mit koronal sich reduzierendem Durchmesser

### Literatur

Atieh, M. A., Ibrahim, H. M. & Atieh, A. H. (2010) Platform switching for marginal bone preservation around dental implants: a systematic review and meta-analysis. J Periodontol 81, 1350-1366. doi:10.1902/jop.2010.100232.
Canullo, L., Pace, F., Coelho, P., Sciubba, E. & Vozza, I. (2011) The influence of platform switching on the biomechanical aspects of the implant-abutment system. A three dimensional finite element study. Med Oral Patol Oral Cir Bucal 16, e852-856.
Khurana, P., Sharma, A. & Sodhi, K. K. (2011) Influence of Fine Threads and Platform-Switching on Crestal Bone Stress around Implant - A Three Dimensional Finite Element Analysis. J Oral Implantol. doi:10.1563/AAID-JOI-D-10-00148.
Zipprich, H., Weigl, P., Lange, B., Lauer, H.C. (2007) Erfassung, Ursachen und Folgen von Mikrobewegungen am Implantat-Abutment-Interface. Implantologie 15 (1), 31-46.

## Patentansprüche

1. Einteiliges enossales Dentalimplantat mit einem stiftförmigen Außengewindekörper (1) zum Einschrauben in einen Kieferknochen, wobei der Außengewindekörper (1) am koronalen Ende einen Kopfteil (30) aufweist, der nach dem Einschrauben aus dem Kieferknochen herausragt, wobei der Durchmesser des Kopfteils (30) in dem Bereich (10), in dem er aus dem Knochen austritt (15), kleiner ist als der Durchmesser des Außengewindekörpers, die folgenden 1,25 mm mit einer kreisrunden Form konstant bleibt und sich in den folgenden 2 mm mit einer Abwinklung von 1-2° zur Implantatachse reduziert und der Kopfteil (30) dabei die Form eines Sechskants annimmt, wobei der Kopfteil (30) eine Höhe von 3,5 bis 4 mm aufweist.

2. Dentalimplantat nach Anspruch 1, **dadurch gekennzeichnet, dass** der Durchmesser des Kopfteils (30) an der Knochenaustrittsstelle (15) 0,2 bis 2 mm kleiner ist als der Durchmesser des Außengewindekörpers (1).

3. Dentalimplantat nach Anspruch 2, **dadurch gekennzeichnet, dass** der Durchmesser des Kopfteils (30) an der Knochenaustrittssteile (15) 0,2, 0,5, 0,8, 1, 1,5 oder 2 mm kleiner ist als der Durchmesser des Außengewindekörpers (1).

4. Dentalimplantat nach einem der vorstehenden Ansprüche, **dadurch gekennzeichnet, dass** die Anzahl der Schraubwindungen (5) des Außengewindekörpers (1) im oberen Bereich ansteigt.

5. Kit umfassend ein Dentalimplantat nach einem der vorstehenden Ansprüche, **dadurch gekennzeichnet, dass** es am koronalen Ende ein Abutment in Platform-Switching-Konstruktion zur Befestigung einer Suprakonstruktion aufweist.

6. Kit nach Anspruch 5, **dadurch gekennzeichnet, dass** das Abutment durch Verschrauben am Implantat befestigt ist.

7. Kit nach einem der Ansprüche 5 und 6, **dadurch gekennzeichnet, dass** die Suprakonstruktion unter Kronen, Brücken- und Prothesenankern ausgewählt ist.

8. Kit nach einem der Ansprüche 5 bis 7, **dadurch gekennzeichnet, dass** die Suprakonstruktion durch Verschrauben, Zementieren oder Verkleben an dem Abutment befestigt ist.

## Claims

1. A one-piece endosseous dental implant with a pin-shaped male threaded body (1) for screwing into a jawbone, wherein the male threaded body (1) has a head part (30) at the coronal end which projects from the jawbone after screwing in,
wherein the diameter of the head portion (30) in the region (10) in which it emerges from the bone (15) is smaller than the diameter of the externally threaded body, the following 1.25 mm remain constant with a circular shape and are in the following 2 mm with an angulation of 1-2° to the implant axis and the head part (30) thereby assuming the shape of a hexagon, wherein the head part (30) has a height of 3.5 to 4 mm.

2. A dental implant according to claim 1, **characterised in that** the diameter of the head part (30) at the bone exit point (15) is 0.2 to 2 mm smaller than the diameter of the external thread body (1).

3. A dental implant according to claim 2, **characterised in that** the diameter of the head part (30) at the bone exit parts (15) is 0.2, 0.5, 0.8, 1, 1, 5 or 2 mm smaller than the diameter of the external threaded body (1).

4. A dental implant according to one of the above claims, **characterised in that** the number of screw turns (5) of the male threaded body (1) increases in the upper region.

5. A kit comprising a dental implant according to one of the above claims, **characterised in that** it has at the coronal end an abutment in platform-switching construction for fastening a superstructure.

6. A kit according to claim 5, **characterised in that** the abutment is fastened to the implant by screwing.

7. A kit according to claims 5 and 6, **characterised in that** the superstructure is selected from crowns, bridge and prosthesis anchors.

8. A kit according to any of claims 5 to 7, **characterised in that** the superstructure is attached to the abutment by screwing, cementing or bonding.

## Revendications

1. Implant dentaire endo-osseux d'une seule pièce avec un corps fileté mâle (1) en forme de tige pour vissage dans une mâchoire, dans lequel le corps fileté mâle (1) présente une partie tête (30) à l'extrémité coronaire qui dépasse de la mâchoire après vissage,
dans laquelle le diamètre de la partie tête (30) dans la région (10) dans laquelle elle sort de l'os (15) est inférieur au diamètre du corps fileté extérieurement, les 1,25 mm suivants restent constants avec une forme circulaire et sont dans les 2 mm suivants avec une angulation de 1-2° vers l'axe de l'implant et la partie tête (30) prenant ainsi la forme d'un hexagone, la partie tête (30) a une hauteur de 3,5 à 4 mm.

2. Implant dentaire selon la revendication 1, **caractérisé en ce que** le diamètre de la partie tête (30) au point de sortie osseuse (15) est inférieur de 0,2 à 2 mm au diamètre du corps fileté externe (1).

3. Implant dentaire selon la revendication 2, **caractérisé en ce que** le diamètre de la partie tête (30) au niveau des parties de sortie osseuse (15) est inférieur de 0,2, 0,5, 0,8, 1, 1, 1, 5 ou 2 mm au diamètre du corps fileté externe (1).

4. Implant dentaire selon l'une des revendications ci-dessus, **caractérisé en ce que** le nombre de tours de vis (5) du corps fileté mâle (1) augmente dans la zone supérieure.

5. Kit comprenant un implant dentaire selon l'une des revendications ci-dessus, **caractérisé en ce qu'**il présente à l'extrémité coronaire un pilier en construction à plate-forme de commutation pour la fixation d'une superstructure.

6. Kit selon la revendication 5, **caractérisé en ce que** le pilier est fixé à l'implant par vissage.

7. Kit selon les revendications 5 et 6, **caractérisé en ce que** la superstructure est choisie parmi les couronnes, le bridge et les ancrages de prothèse.

8. Kit selon l'une quelconque des revendications 5 à 7, **caractérisé en ce que** la superstructure est fixée à la partie secondaire par vissage, cimentation ou collage.
